Europäisches Patentamt

European Patent Office

Office européen des brevets

(19)

(11) EP 1 162 699 A1

(12) **EUROPEAN PATENT APPLICATION**

(43) Date of publication:
**12.12.2001 Bulletin 2001/50**

(51) Int Cl.⁷: $H01R\ 13/24$, $G06K\ 7/00$

(21) Application number: **01401357.7**

(22) Date of filing: **23.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.06.2000 FR 0007139**

(71) Applicant: **ITT MANUFACTURING ENTERPRISES, INC.**
**Wilmington, Delaware 19801 (US)**

(72) Inventors:
• **Bricaud, Hervé**
**39100 Dole (FR)**
• **Pizard, Yves**
**39100 Dole (FR)**

(74) Representative: **Kohn, Philippe**
**Cabinet Philipp Kohn,**
**30, rue Hoche**
**93500 Pantin (FR)**

(54) **Electrical connector with improved contact blades for connecting a smart card**

(57)     The invention provides an electrical connector (10) comprising an insulating body (12), forming a contact body having a plane horizontal upper face (16), and elastically deformable longitudinal contact blades each comprising a contact end (30) which has the overall shape of an inverted spoon in order to define a contact region (88) which is curved about two axes, a longitudinal axis and a transverse axis, in order to define at least one lateral face (80) of the spoon (30) which extends downwards towards the upper face (16) of the insulating body (12), characterized in that the said lateral face (80) of the contact spoon (30) is an approximately plane face which is inclined with respect to the horizontal plane of the upper face (16) of the insulating body (12) in order to form a ramp with which an edge of the card is capable of engaging when it is being put into place in the read-write device (94).

Fig. 11

EP 1 162 699 A1

## Description

The present invention relates to an electrical connector for connecting a smart card having, on one of its main faces, a plurality of electrical contact pads aligned parallel to the direction of insertion of the card into a read-write device.

The invention relates more particularly to a connector of the type comprising:

- a contact-holding body of insulating material having a plane horizontal upper face extending in two perpendicular directions, the longitudinal direction and the transverse direction, and
- a plurality of electrical conductors in the form of elastically deformable blades arranged so as to be parallel to the said longitudinal direction,

each contact blade comprising :

- . a curved first end for contact with a corresponding pad on the card C, which extends through a housing in the insulating body so as to project out of the plane of the upper plane face of the insulating body;
- . a central portion for connecting the blade to the insulating body; and
- . a second end for connecting the blade to a processing circuit of the read-write device;

and of the type in which the curved contact end has the overall shape of an upside down spoon, the external convex face of which is oriented upwards in order to define a contacting region or top of the blade and which is curved about two, longitudinal and transverse, axes in order to define at least one lateral face of the contact spoon, of overall longitudinal orientation, which extends downwards towards the upper face of the insulating body.

Such a design is described in document US-A-5 527 192. In that document, the electrical connector is of the type designed to be associated with a read-write apparatus into which the smart card, also called chip card, is inserted longitudinally, parallel to the plane upper face of the insulating body.

Each contact blade 12 generally has a design symmetry with respect to a vertical plane passing through the overall longitudinal axis of the contact blade, and each contact end 30, in the form of a contact spoon, is also symmetrical with respect to a longitudinal and vertical mid-plane of the spoon. Each spoon thus has two opposed lateral cheeks or flanges 64, of longitudinal orientation, which are approximately plane and each of which prolongs downwards the domed part of the spoon in order to progressively extend vertically into a longitudinal plane perpendicular to the horizontal upper face 22 of the insulating body.

Each vertically oriented plane lateral face also extends "into" the insulating body, that is to say its lower edge, in the rest position of the blade, lies vertically below the plane of the upper face of the insulating body.

This design makes it possible in particular to prevent any damage to the contact blades, especially when attempts are being made to break into the apparatus by inserting an object into it. For this purpose, the longitudinal lower edge 26 of each vertical lateral face 64 lies below the upper face of the insulating body.

Such a design is not entirely satisfactory when the card is being put into place or inserted into the read-write apparatus and/or into the connector in a direction and/or an orientation other than those described above.

This is especially the case when the card is inserted parallel to the plane of the upper face of the insulating body, but in a transverse direction, or else when the card is put into place in an overall inclined manner, as described for example and illustrated in French Patent Application No. 00/02006 filed on 18 February 2000.

Moreover, as will be explained in detail below, such a symmetrical design of the spoon with two tall lateral cheeks leads to a transverse evolute of the spoon whose dimension is incompatible with the industrial process of imbricated cutting to a pitch of 1.27 mm of the contact spoons of the facing rows.

To remedy these drawbacks, the invention provides a connector of the abovementioned type, characterized in that the said lateral face of the contact spoon is an approximately plane face which is inclined with respect to the horizontal plane of the upper face of the insulating body in order to form a ramp with which an edge of the card C is capable of engaging when it is being put into place in the read-write device.

According to other characteristics of the invention:

- the contact spoon has a design which is unsymmetrical with respect to its vertical longitudinal mid-plane;
- the inclined lateral face of the contact spoon makes an angle of about 45° with respect to the plane of the horizontal upper face of the insulating body;
- when the contact blade is in its rest state, at least one portion of the lower longitudinal edge of the inclined lateral face of the contact spoon lies vertically below the plane of the upper face of the insulating body;
- when the contact blade is in its rest state, the lower longitudinal edge of the inclined lateral face of the contact spoon is entirely located vertically below the plane of the upper face of the insulating body;
- the inclined lateral face of the contact spoon has an approximately plane central portion, which is parallel to the longitudinal direction, and two, front and rear, end portions which are inclined with respect to the longitudinal axis of the contact spoon;
- the central portion of the inclined lateral face of the contact spoon is centred longitudinally with respect to the contacting top of the contact spoon;

- the inclined transverse face of the contact spoon extends from a central and domed top region of the contact spoon;
- the longitudinal mid-axis of the contact blade lies approximately in the vertical longitudinal mid-plane of the contact spoon and in that [sic] the contacting top is offset transversely with respect to the vertical longitudinal mid-plane of the contact spoon;
- the longitudinal mid-axis of the contact blade is offset transversely with respect to the vertical longitudinal mid-plane of the contact spoon and in that the contacting top lies in the vertical longitudinal mid-plane of the contact spoon;
- the contact end is extended longitudinally forwards by a nose which is pressed elastically, vertically upwards, by bearing against a stop surface of the insulating body in order to determine the rest state of the contact blade with respect to the insulating body;
- the insulating body is bounded longitudinally by at least one rear vertical plane transverse face in which housings emerge longitudinally, each of which housings accommodates a contact blade, into which the contact blade is put into place by longitudinal insertion from the rear forwards, and each of which housings is open in the plane upper face of the insulating body for passage of the curved contact end;
- the central connecting part of each blade is a part bent into the form of a hairpin extending approximately parallel to the upper plane face of the insulating body, having a first branch, the free end of which is extended by the connection end of the blade and which includes means for fastening the blade to the insulating body, and having a second branch, the free end of which is extended by the curved contact end of the blade, the first and second branches being joined together by a central U-shaped bend turned towards the centre of the connector.

Further features and advantages of the invention will become apparent on reading the detailed description which follows, for the understanding of which reference will be made to the appended drawings in which:

- Figure 1 is an isometric perspective top view, from the left, of an illustrative example of an electrical connector according to the prior art, which is provided with contact blades of the type shown in Figure 8;
- Figure 2 is a top view of the connector illustrated in Figure 1;
- Figure 3 is a side view from the left of the connector illustrated in Figure 2;
- Figure 4 is an isometric perspective top view, from the left, of the insulating body of the connector illustrated in Figures 1 and 2;
- Figure 5 is an isometric perspective bottom view, from the right, of the insulating body;
- Figure 6 is a view in a cross section through a vertical longitudinal plane on the line 6-6 in Figure 2;
- Figure 7 is a view in a cross section through a vertical longitudinal plane on the line 7-7 in Figure 2;
- Figure 8 is a perspective view on a large scale of one of the eight contact blades with which the electrical connector illustrated in Figures 1 to 7 is equipped;
- Figure 9 is a view similar to that in Figure 8 which shows an alternative embodiment of the contact blade according to the prior art, which differs from that in Figure 8 by the design of its connection tab;
- Figure 10 is a view similar to that in Figure 1, which shows a first example of a connector similar to that shown in Figures 1 to 8, but which here has three pairs of contact blades in accordance with the teachings of the invention;
- Figure 11 is a perspective top view, from the right, of the connector in Figure 10, along the arrow F11 in this figure;
- Figure 12 is a schematic representation which illustrates the arrangement of the connector of Figures 10 and 11 in a read-write device allowing a horizontal card C to be inserted in the transverse direction T;
- Figure 13 is a perspective bottom view of the connector of Figures 10 and 11;
- Figure 14 is a top view of the connector of Figures 10 and 11;
- Figures 15A and 15B are side views, with partial cut-away, along the arrows F15A and F15B in Figure 14;
- Figure 16 is a longitudinal end view along the arrow F16 in Figure 14;
- Figure 17 is a view similar to that in Figures 8 and 9, which illustrates one of the contact blades according to the invention with which the connector in Figures 10 to 16 is equipped;
- Figure 18 is a view similar to that in Figure 17, which illustrates another design of the contact blades of the connector in Figures 10 to 16, the shape of the contact spoon of which is symmetrical with that of the blade in Figure 17 with respect to the transverse mid-plane;
- Figures 19 and 20 are perspective top views along the arrows F19 and F20 in Figures 17 and 18;
- Figures 21 and 22 are perspective bottom views along the arrows F21 and F22 in Figures 19 and 20;
- Figures 23 to 33 are views similar to those in Figures 10 to 12, which illustrate a second embodiment of a thin connector fitted with contact blades in accordance with the teachings of the invention;
- Figure 34 is a top view on a large scale of the contact blade shown in Figure 32;
- Figure 35 is a side view along the arrow F35 in Figure 34;

- Figure 36 is a longitudinal end view along the arrow F36 in Figure 34;
- Figure 37 is a view in cross section along the line 37-37 in Figure 34;
- Figures 38 to 41 are views similar to those in Figures 34 to 37 and show an alternative embodiment of the contact blade;
- Figures 42 and 43 are views similar to those in Figures 72 to 78 of French Patent Application No. 00/02006 filed on 18 February 2000 and which illustrate two phases of inserting a card into a connector according to a third embodiment of the invention and/or for extracting a card therefrom;
- Figure 44 is a schematic view illustrating the process for cutting, and forming into strips, the contact blades and the contact spoons according to the invention.

In the description which follows, identical, similar or analogous elements will be denoted by the same reference numbers.

In order to make the description and drafting of the claims easier, the terms vertical, horizontal, upper, lower, front, rear, left, right, etc. will be used non-limitingly, and with reference to the figures.

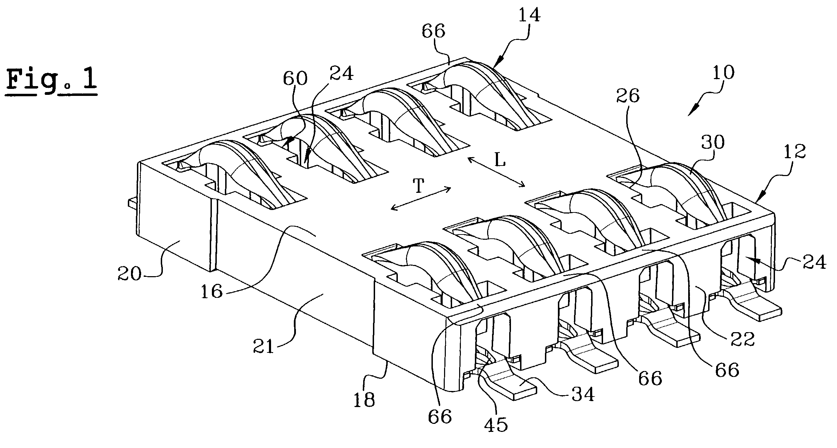

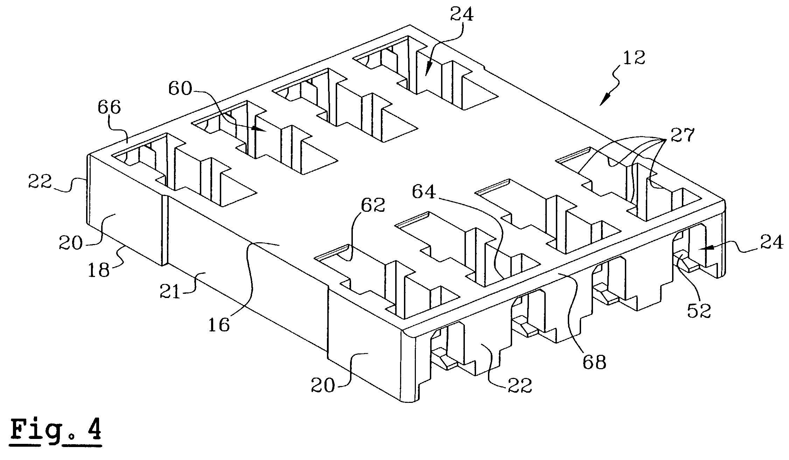

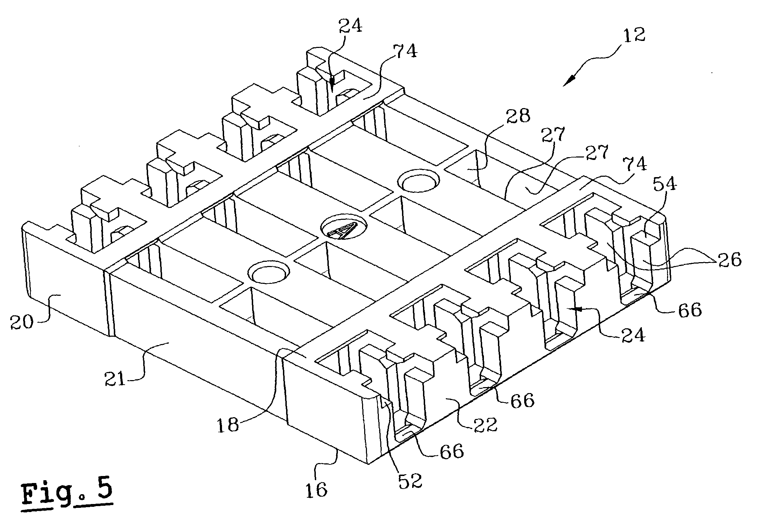

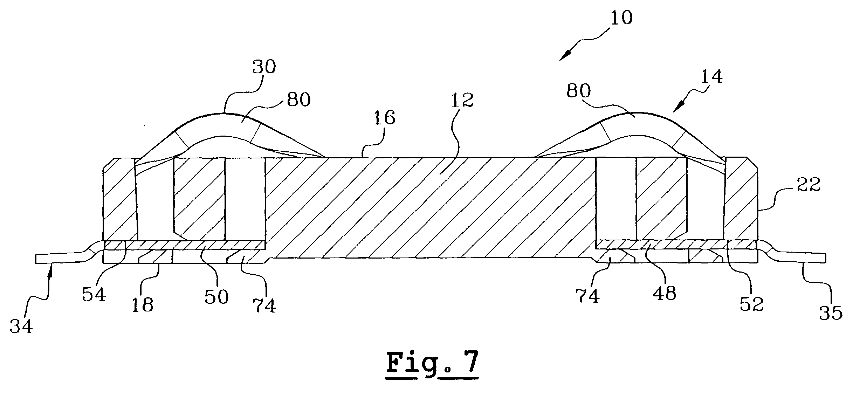

Figures 1 to 7 show an illustrative example of an electrical connector 10 according to the teachings of the prior art.

According to the known overall design of French Patent Application No. 99/05857 filed on 7 May 1999, the connector 10 essentially consists of a body of insulating plastic material 12, made by moulding, which constitutes a support element forming a contact holder for a series of eight contact blades 14 made of conducting material.

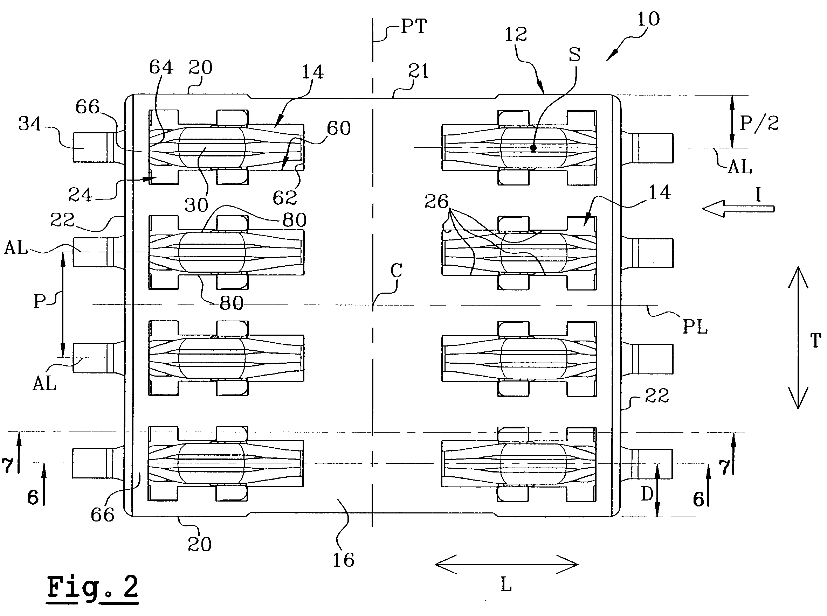

In general, the connector 10 here exhibits a double design symmetry with respect to two perpendicular vertical planes of symmetry, the longitudinal plane PL and the transverse plane PT, the lines of which are shown in Figure 2 and the point of intersection C constitutes the centre of the connector.

In Figures 1 to 7, the connector 10 has four pairs of contact blades 14 aligned longitudinally in pairs.

The connector 10 thus has eight contact blades, each of which is capable of engaging, in a known general manner, with a corresponding conducting pad on a smart card, not shown in Figures 1 to 7.

The insulating body 12 is a piece having the overall shape of a flattened rectangular parallelepiped which is bounded by a plane horizontal upper face 16 which extends in two perpendicular directions, the longitudinal direction L and the transverse direction T, a horizontal lower face 18, two opposed longitudinal lateral faces 20, of vertical orientation, and two opposed rear transverse lateral faces 22, of vertical orientation.

According to this known general design, the insulating body 12 has two series of four housings 24 aligned in pairs.

Each housing 24 emerges longitudinally in a corresponding rear transverse face 22 and it is open vertically downwards in the lower face 18 and vertically upwards in the upper face 16.

Each housing 24 is overall bounded transversely by two parallel faces 27 whose intersection with the upper face 16 corresponds to an upper longitudinal edge 26 of the hole formed in the upper face.

Each housing 24 is bounded longitudinally forwards, that is to say towards the centre C of the connector, by a vertical transverse partition 28.

Each housing 24 and [sic] designed to accommodate a contact blade 14 made of an elastically deformable conducting material. Each contact blade 14 constitutes a cut and folded conducting element. Each contact blade 14 extends in the longitudinal direction L and in a vertical plane parallel to the longitudinal plane of symmetry PL.

Each contact blade 14 has a convex curved first contact end 30, with its convexity oriented vertically upwards, which has the overall shape of a spoon and which is designed to engage with a corresponding pad on a smart card which can be inserted into a read-write device (not shown) with which an electrical connector 10 is equipped.

The curved contact end 30 of each blade 14 is extended longitudinally rearwards by an approximately horizontal nose 32, the function of which will be explained below.

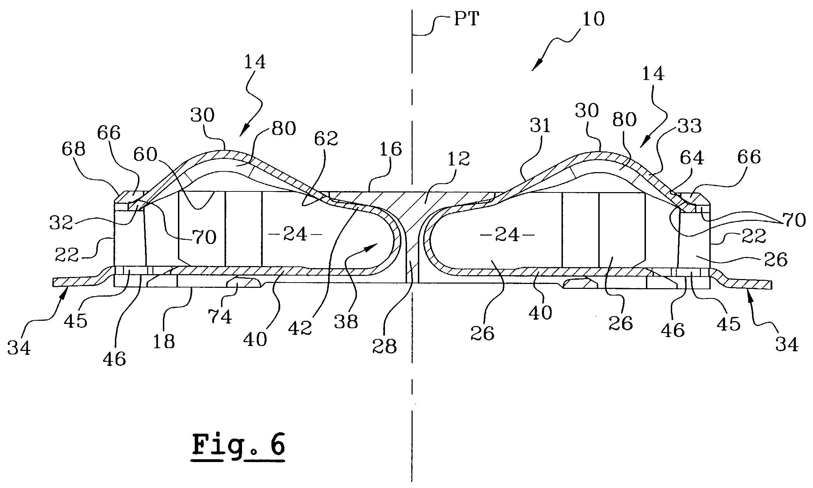

More specifically, the nose preferably extends horizontally or in a direction approximately along the extension of the inclined rear longitudinal part 33 of the inclined end 30 (see Figure 6).

Each contact blade 14 also has a connection end 34 which, in the example illustrated in Figures 1 to 8, extends horizontally and longitudinally towards the outside of the insulating body 10 beyond the corresponding rear transverse face 22, with its lower face 35 which here is in the plane of the lower face 18 of the insulating body 12.

Each connection end 34 constitutes a tab allowing each blade 14 to be electrically connected to a conducting track on a printed-circuit board, not illustrated, for example by soldering using the technique of surface mounting or by contacting using the " solder-less" technique.

The curved contact end 30 and the connection end 34 of each blade 14 are joined together by a hairpin-shaped central linking part 38.

The central linking part 38 of each blade 14 thus has a first branch 40, which extends in an approximately horizontal longitudinal direction (or alternatively, as represented in the document FR A 2 714 539, inclined downwards) and parallel to the lower face 18 of the insulating body 12, and a second branch 42 forming an acute angle with the first branch 40, which branches are joined together by the central bend 44 in the form of a U on its side.

The central bend 44 is turned towards the centre of the connector 10, that is to say towards the transverse intermediate partition 28 so as to be located approximately in line with the conducting pads on the chip of the smart card when the latter is in the read-write position.

This geometrical arrangement makes the connector very compact and occupies little space on the printed-circuit card, its longitudinal dimension corresponding to the distance separating the two opposed transverse faces 22, while its transverse dimension corresponds to the distance separating the two opposed longitudinal faces 20.

The sizing of the various components of the connector, and especially of the insulating body 12, is such that the transverse distance D separating a longitudinal lateral face 20 from the vertical mid-plane passing through the immediately adjacent pair of blades 14 is equal to half the standardized pitch P separating two adjacent blades 14 (see Figure 2), i.e. $D = P/2$. Thus, it is possible to mount adjacent connectors via their lateral faces 20 so that all the contact blades 14 of the connector body thus formed are separated by a constant pitch P.

By virtue of this characteristic, it is possible to group together corresponding insulating bodies with twelve adjacent conducting blades, for example in order to produce three connectors having four pairs of blades, or four connectors having three pairs of blades, so as to insert the twelve blades on each side simultaneously. The assembly costs are thus reduced and the production capacities of the assembly machines may be increased.

In order to guarantee good geometrical precision on the transverse dimension or width of the insulating body 12 separating its longitudinal faces 20, each of them has a central recess 21 in which inflows from the injection gates or shaped pieces for handling the component may be provided.

The free end 46 of the first branch 40 of each blade 14 has a greater width than the average width of the blade and it extends longitudinally, vertically in line with the free end in the form of a nose 32 of the curved contact end 30 and has, in a known manner, a hole 45 into which the nose 32 can penetrate when the upper branch 42 with the curved end 30 bends vertically downwards.

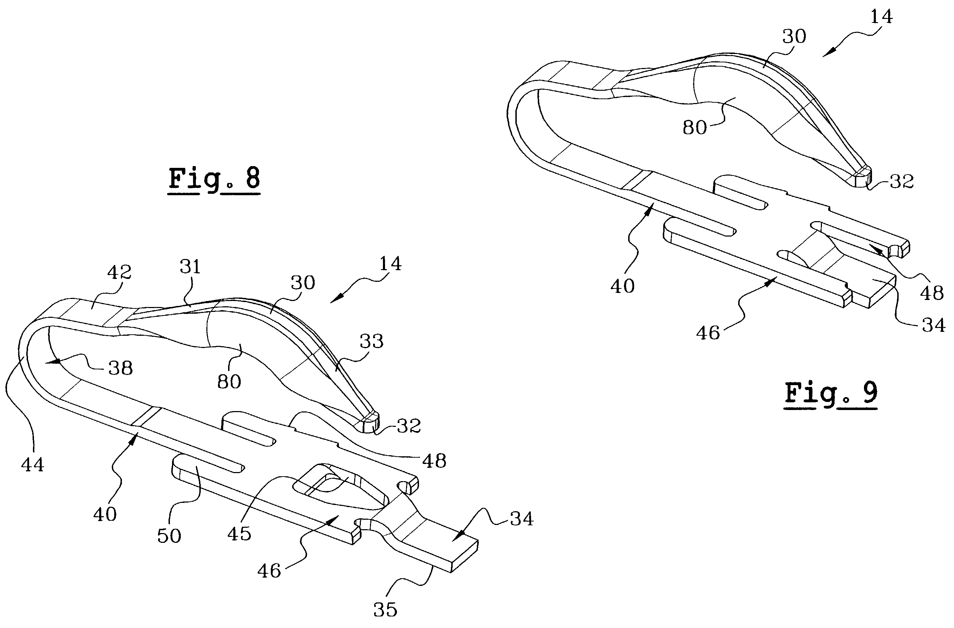

Each widened free end 46 is extended by the connecting tab 34. In a known manner, each free end 46 has, in order to mount the blade 14 and hold it in position in its housing 24, a lateral harpoon 48 and a lateral stabilizing tab 50 which are accommodated in respective complementary lateral slots 52 and 54 in each housing 24. As may be seen in Figure 8, the teeth of the harpoon 47 are formed along a cut longitudinal tab which, like the tab 50, also has the function of stabilizing the contact blade 14 in position in its housing 24.

Each housing 24 runs into the upper face 16 in which it defines, in the top view and as may be seen in Figure 2, a slot 60, defined by longitudinal parallel edges, which allows passage of the curved contact end 30 of the blade 14 and, partly, passage of the second branch 40 of the central linking part 38.

Each slot 60 is bounded longitudinally towards the front by an edge 62 and, according to the teachings of the invention, it is bounded towards the rear by the rear transverse edge 64 of a crosspiece 66 moulded as one piece with the insulating body 12.

As may be seen in Figure 2, the slots 60 leave free, at the centre of the upper face 16, a solid surface allowing the component to be picked up by suction for the purpose of placing it, using the "pick and place" technique.

Each crosspiece 66 is arranged at the upper part of the housing 24 and at its rear transverse end with, as shown in the figures, a chamfer 68 facilitating the longitudinal insertion of a card.

Each crosspiece 66 constitutes a stop by means of its inclined internal lower face 70 against which the nose 32 of the associated contact blade 14 bears elastically so as to define the rest position of the blade 14, as illustrated, for example, in Figure 6.

Thus, the curved end 30 of each contact blade 14 is held in a precise geometrical position, especially with respect to the upper face 16, with a slight elastic prestress. Thus, the vertical dimension or height of the contacting top S of each contact spoon 30 is defined with respect to the plane of the upper face 16 of the insulating body 12.

The crosspieces 66 together contribute to stiffening the insulating body 12, as do also the lower crosspieces 74.

The continuity of material provided by the crosspieces 66 also makes it possible to prevent attempts to detach the spoons 30 of the contact blades 14, the noses 32 of which are protected against any attempt to interfere by inserting an object longitudinally from the rear forwards into the housings 24, whose upper part, which is the only part accessible through the slot for inserting the card into the read-write device, is blocked off by the crosspieces 66.

In the embodiment of the contact blade illustrated in Figure 9, it may be seen that the connecting tab 34 is short. The connecting tabs 34 are thus located entirely inside the connector 10, the maximum length dimension of which corresponds to the distance separating its opposed transverse faces 22. However, the tabs 34 are visible and accessible from the outside, through the entry into the housings 24, by an infrared solder-reflow beam.

Because of the downward vertical offset of the connecting tabs 34 with respect to the branch 40, and because of the fact that the connecting tabs 34 are then located vertically in line with the noses 32, or set back towards the front in the direction of the centre, it is not necessary to provide a hole 45, the clearance offered by the tabs 34 facing the noses 32 allowing the contact blades 14 to flex either in the working position (card inserted) for thin connectors or while they are being inserted longitudinally into the housings 24. When putting each contact blade 14 into position by longitudinal insertion, each crosspiece 66 engages with the inclined upper face 31 of the front longitudinal part of the convex curved end 30 in order to elastically move the latter away, vertically downwards, with the nose 32 entering the hole 45.

In the various known designs from the prior art, two of which are illustrated especially in Figures 8 and 9, the spoon of each contact blade generally has a shape which is symmetrical with respect to a vertical plane passing through its longitudinal axis of symmetry, the pitch separating two adjacent blades being the transverse distance separating the two axes of symmetry AL of these two blades.

This design according to the prior art is suitable for putting a card in place in the read-write device or apparatus by longitudinal insertion, in the direction "l" indicated by an arrow in Figure 2, the overall plane of the card then being approximately horizontal and parallel to the plane of the upper face 16 of the insulating body.

During this longitudinal insertion, the front transverse edge of the card engages with the inclined rear longitudinal part 33 of the inclined end 30 (see Figure 6). This produces a ramp effect which causes the blade to flex in order to allow insertion of the card which engages, of course, simultaneously with the four parallel blades of the row of blades arranged on the insertion side, and then it engages with the inclined upper face 31 of the front longitudinal part of the convex curved end 30 of each blade of the other row so as to move it elastically away, vertically downwards, here again with the nose 32 penetrating the hole 45.

In contrast, it is virtually impossible to insert the card horizontally in the longitudinal direction, whether from the left or from the right of the insulating body, and especially when the card slides along the upper face 16 of the connector.

This is because, as may be seen especially in Figures 6 to 9, each contact end 30 in the form of an inverted spoon has two lateral cheeks or flanges 80, of longitudinal overall orientation, and each here is plane and vertically oriented, that is to say it extends parallel to the longitudinal mid-plane PL, vertically downwards.

Each lateral flange, which extends vertically downwards the domed upper part of the spoon, thus constitutes a stop which prevents transverse insertion of a card in the direction T, the longitudinally oriented edge of the card, which is then inserted transversely into the device, butting against the two facing lateral flanges of two aligned blades.

The problem is identical when the card is inserted in a horizontal plane, or even in an inclined orientation as is described in French Patent Application No. 00/02006 filed on 18 February 2000.

However, as will be explained below, the design of the contact blades according to this prior art allows industrial production of the contact blades using the process of imbricated cutting.

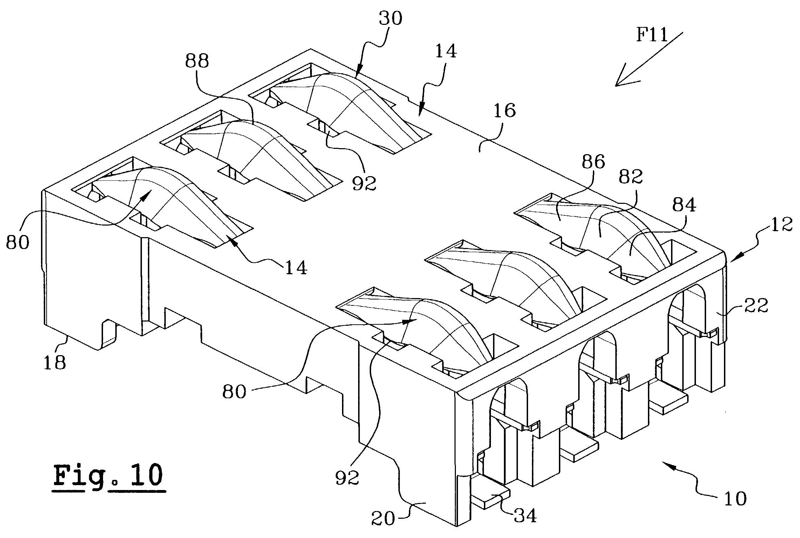

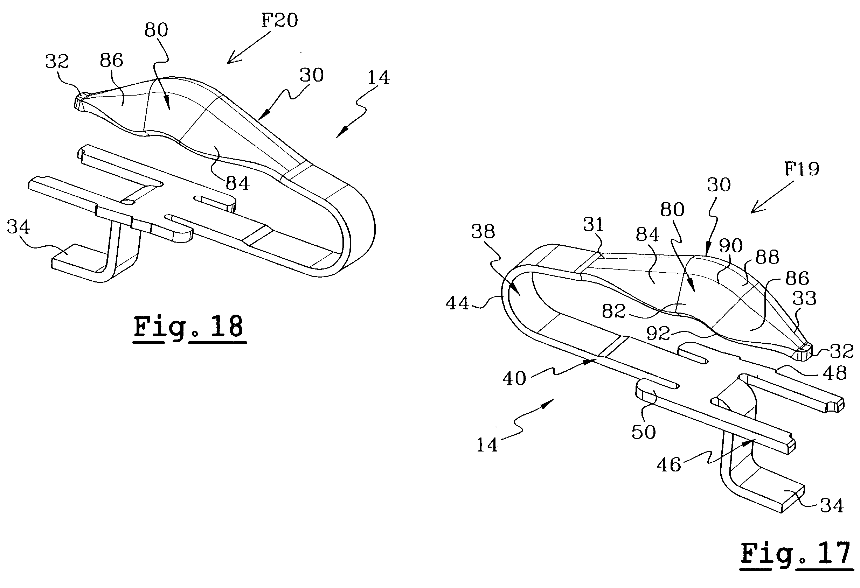

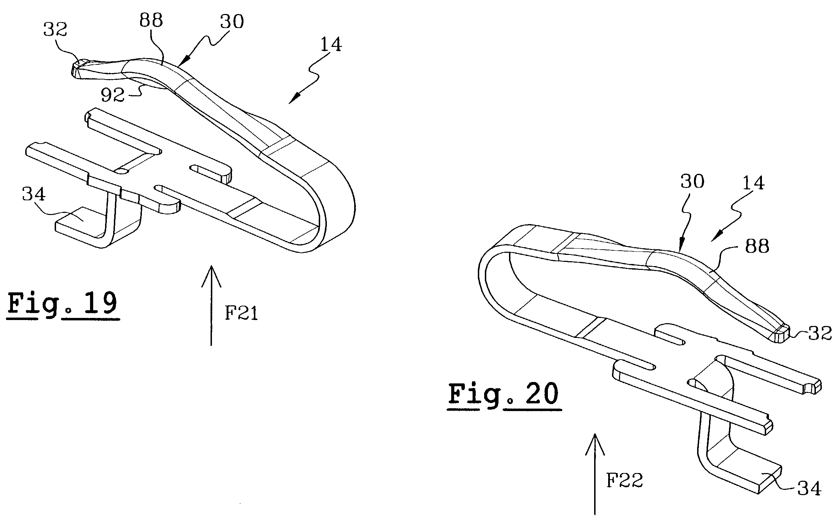

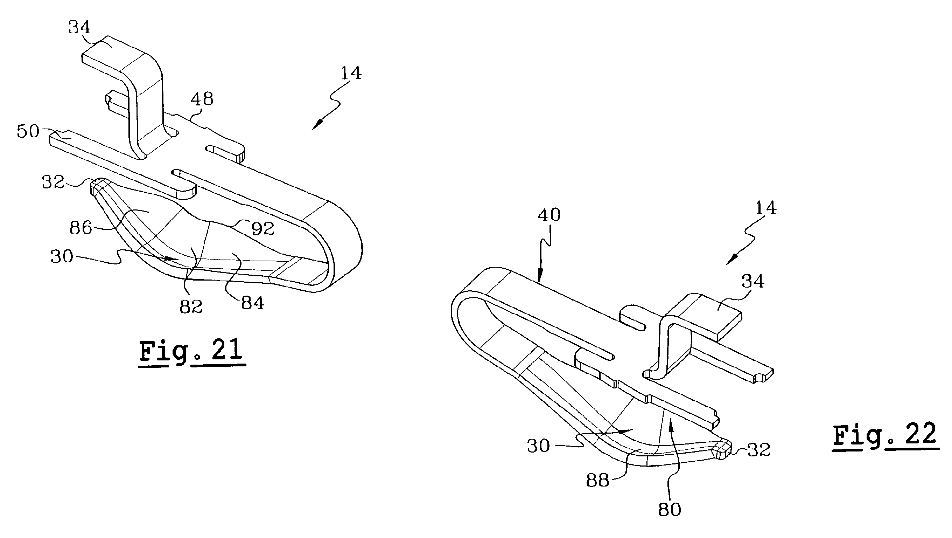

To solve this problem, the invention proposes, for example, to use a connector of the type illustrated in Figures 10 to 22.

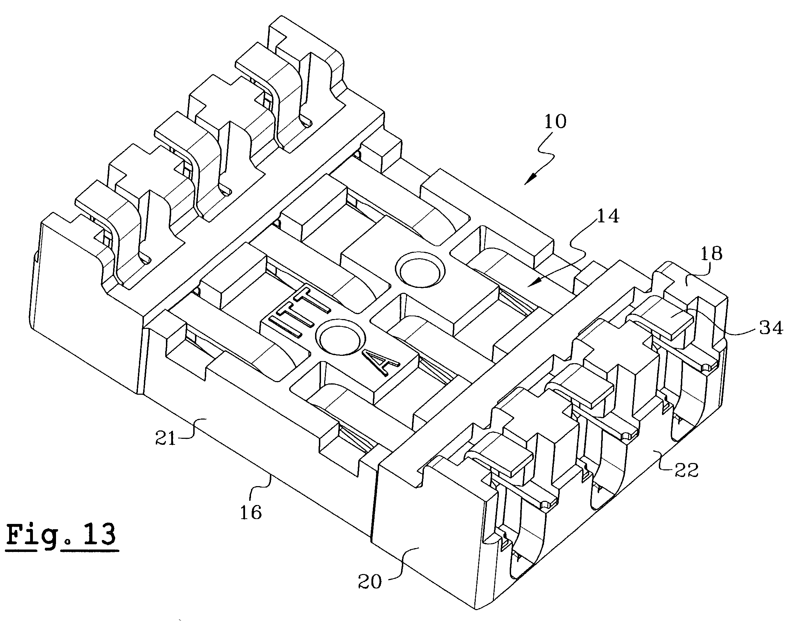

The general design of this connector is overall at every point similar to that of the connector according to the prior art that has just been described with reference to Figures 8 to 9, except for certain constructional details of the insulating body 12, and especially its height, so as, as may be seen in Figure 13, to leave a space available below the central part of the connector, for example for placing components on the printed-circuit board on which the connector is mounted.

According to the teachings of the invention, it is the contact blades 14 of the connector according to the invention which differ from those of the prior art.

In the various embodiments which will be described below, each contact spoon 30 has a dissymmetry or asymmetry of design with respect to the general vertical plane of symmetry of the contact blade passing through its longitudinal axis AL.

This is because each spoon 30 has here a flange in the form of a lateral face 80 which has a profile and a shape inclined approximately at 45° with respect to the vertical and with respect to the horizontal upper face 16 of the insulating body 12, as may be seen especially with regard to Figures 10 to 14.

All the inclined lateral faces 80 of each of the contact blades 14, which here are among six groups of three pairs of blades 14 aligned longitudinally, are oriented transversely on the same lateral side of the connector, here the left-hand side with regard to Figure 10.

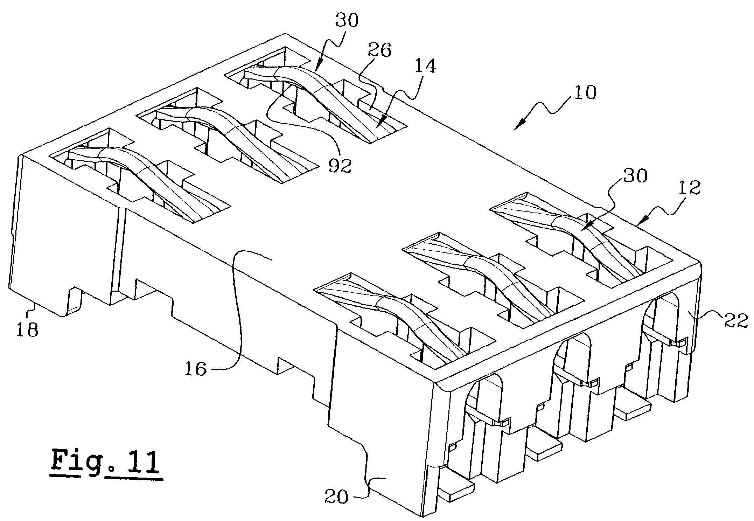

In contrast, and as may be seen more particularly in Figure 11, each contact blade 30 does not have a lateral flange on the opposite side to the inclined lateral face 80.

This unsymmetrical design makes it possible to produce blades with contact spoons according to the teachings of the invention and to integrate them into a connector according to the prior art without in any way modifying the design and the dimensions of this connector, that is to say without especially modifying the dimensions of the cavities in the insulating body which may accommodate, depending on the manufacturing and production requirements, contact blades according to the prior art or contact blades according to the teachings of the invention.

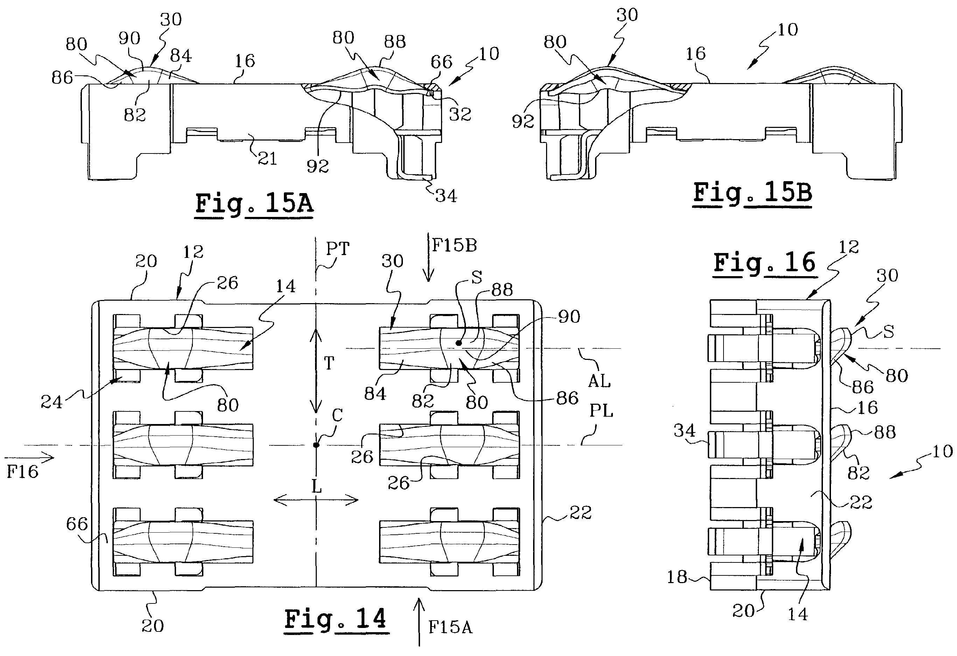

Of course, because of the orientation of all of the inclined lateral faces 80 on the same side of the insulating body, the spoons 30 of the blades 14 with which the connector 10 is equipped are not all identical, and it is necessary to have two types of blades, that is to say three blades of a first type, in order to constitute a row of three blades, and or three blades of the other type, in order to constitute the other row of three adjacent blades, the blades aligned in pairs having, in their spoon region, a design symmetry with respect to the transverse plane PT with regard to Figure 14.

Advantageously, this design according to the invention makes it possible to cut simultaneously the two contact blades belonging to a facing pair of contacts which are imbricated in the strip of contact blades.

As may be seen especially in Figures 14 and 16, the top S of the convex dome of the spoon 30, which is the point via which the spoon is able to come into contact with the corresponding pad on a card, is offset transversely with respect to the longitudinal axis of symmetry AM of the spoon.

However, this transverse offset of the top, compared with a spoon belonging to a contact blade according to the prior art as may be seen in Figure 2, in which the top S lies on the longitudinal axis AL, is about 0.25 mm and this offset is very small compared with the transverse width, equal to about 1.7 mm, of the pads or contact areas on the smart card, the design of which allows for such an offset.

When designing a specific insulating body 12 intended to be associated only with contact blades according to the invention with unsymmetrical spoons, it is also possible for the housing which accommodates the card to be designed to be offset transversely with respect to the contact-holding body so as to "reposition" the tops S of the spoons 30 so as to be approximately in the centre of the conducting pads on the card.

Considering each spoon 30 according to the invention, it may be seen that the inclined lateral face 80 essentially consists of a central portion or facet 82 which is approximately plane, of longitudinal orientation and inclined at 45°, and of two end portions or facets, the front facet 84 and the rear facet 86, each of which has the same overall orientation as the central facet 82 but is progressively domed and inclined to the longitudinal direction in order to be joined to the other parts and regions of the spoon 30, the central or top part or region 88 of which has the overall shape of a dome rounded in all directions.

As may be seen especially in Figure 14, the central facet 82 of the inclined lateral face 80 extends vertically downwards and transversely from the longitudinal edge 90 of the central dome 88 and it is also arranged symmetrically, in the longitudinal direction, with respect to the top S of the spoon 30 and dome 88.

In the embodiment according to the invention illustrated in the figures, and as may be seen especially in Figure 11, it may be seen that the lower longitudinal edge 92 of each inclined lateral flange 80, when considering each contact blade 14 in its rest state illustrated in the figures, lies vertically below the plane of the upper horizontal face 16 of the insulating body 12.

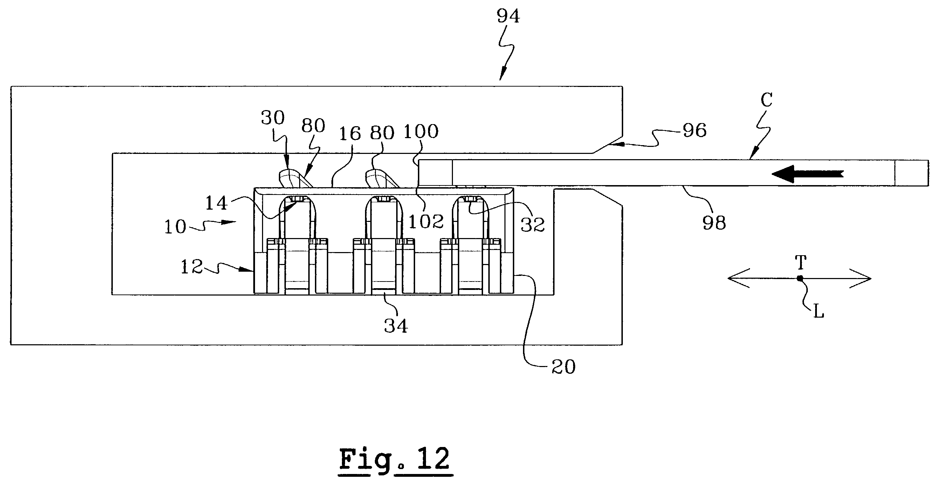

Figure 12 shows schematically a first example of an arrangement of the connector 10 according to the teachings of the invention in a case 94 forming part of a read-write device or apparatus which also has a slot 96 for inserting a smart card C into this device, the lower face 98 of the said card having conducting pads (not shown).

The design of the apparatus and of the electronic equipment that it has is such that it allows this card to be inserted in a horizontal direction parallel to the transverse direction T of the insulating body.

By virtue of the design according to the invention of the contact blades 14, it may be seen that the edge 100, of longitudinal orientation L of the card C, which is first to enter the device through the slot 96, comes successively into contact with the 45°-inclined lateral faces 80 of the various contact spoons that it encounters in succession.

Due to the effect of the thrust or insertion force of the card c into the device 94 in the direction T, from right to left with regard to Figure 12, the edge 100 engages via its lower stop [sic] 102 with the inclined faces 80 in order to move the spoons 30 away by virtue of a ramp effect resulting from the approximately 45°-inclined orientation of its lateral faces 80.

The general design of each contact blade 14 with its unsymmetrical spoon 30 with an inclined lateral face 80 is such that it has an overall stiffness sufficient for the ramp effect resulting from the engagement of the edge 100, 102 of the card C with the lateral face 80 to be converted into an approximately downwards vertical force supplied to the spoon 80 (and then to the entire upper part of the blade 14) in order to deform the latter generally in a vertical plane.

In general, it will be understood that, by virtue of such a design, the card can be inserted in three directions by sliding along the upper face 16 of the insulating body 12.

Only the transverse direction corresponding to the edge on the opposite side from that of the slot 96 in the case 94 is not allowed.

It is therefore important for the connector, which outside the blades has a complete double design symmetry, to be mounted with a "correct" defined orientation in the electronic equipment. For this purpose, in industrial mass production, the connector is advantageously delivered in the form of cavitied strip and each connector is reliably oriented in a known manner in the cavity of the strip which accommodates it.

The correct orientation when mounting the component is then ensured by the technologies usually employed, and especially by the technology called "pick and place".

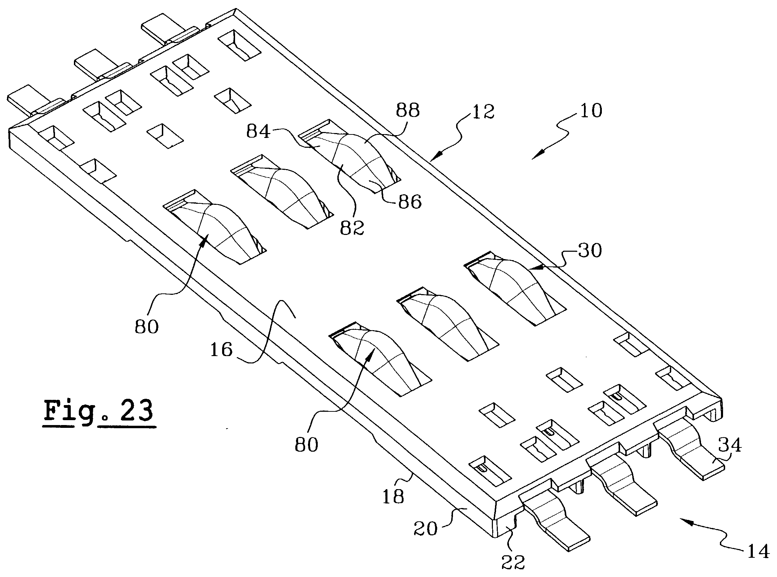

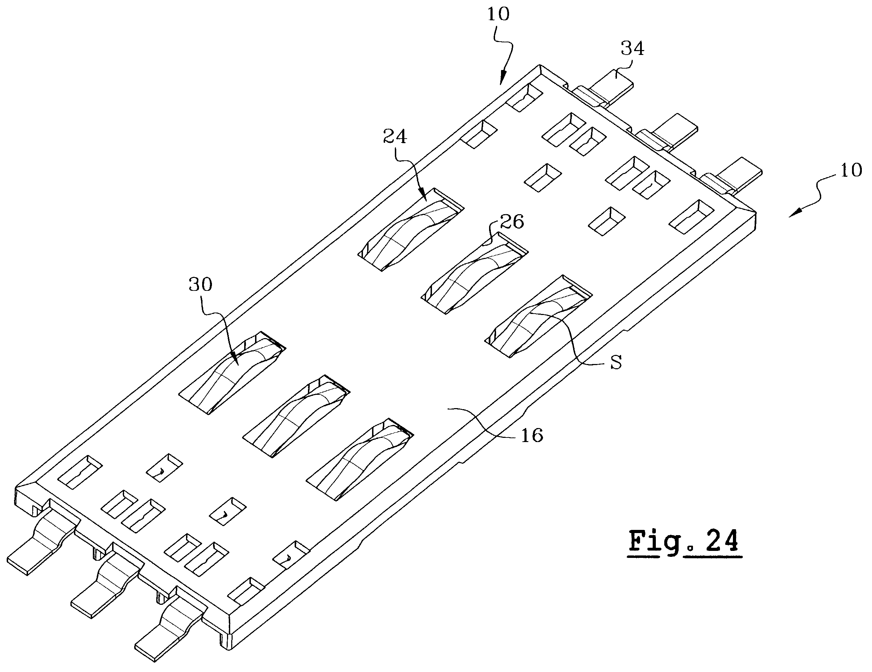

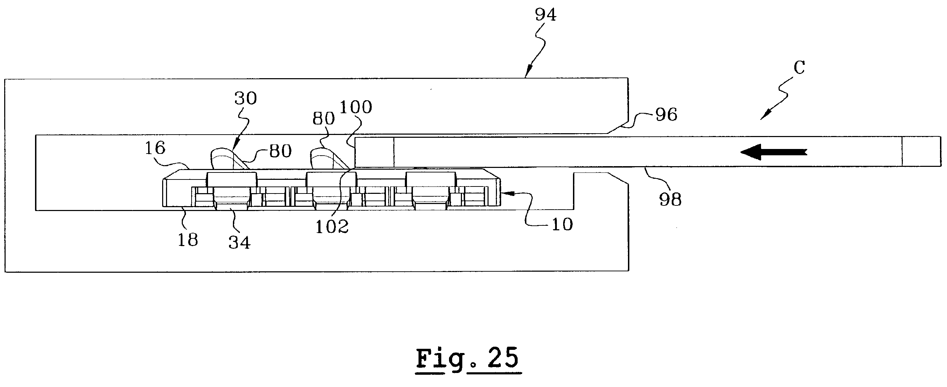

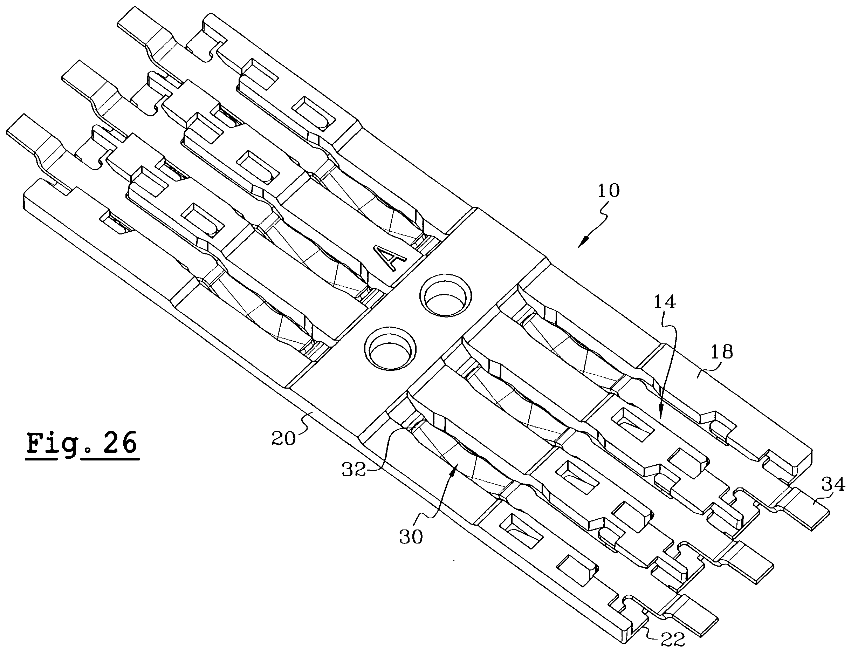

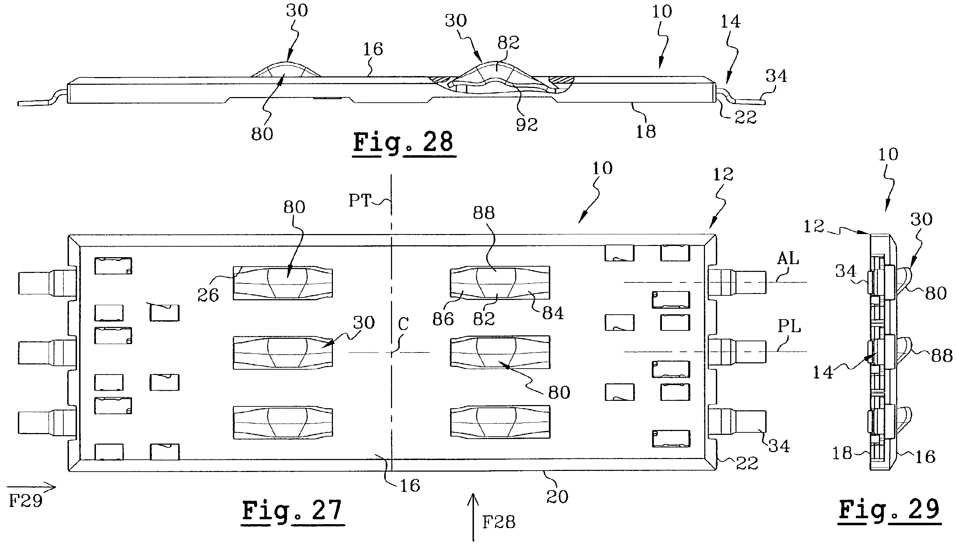

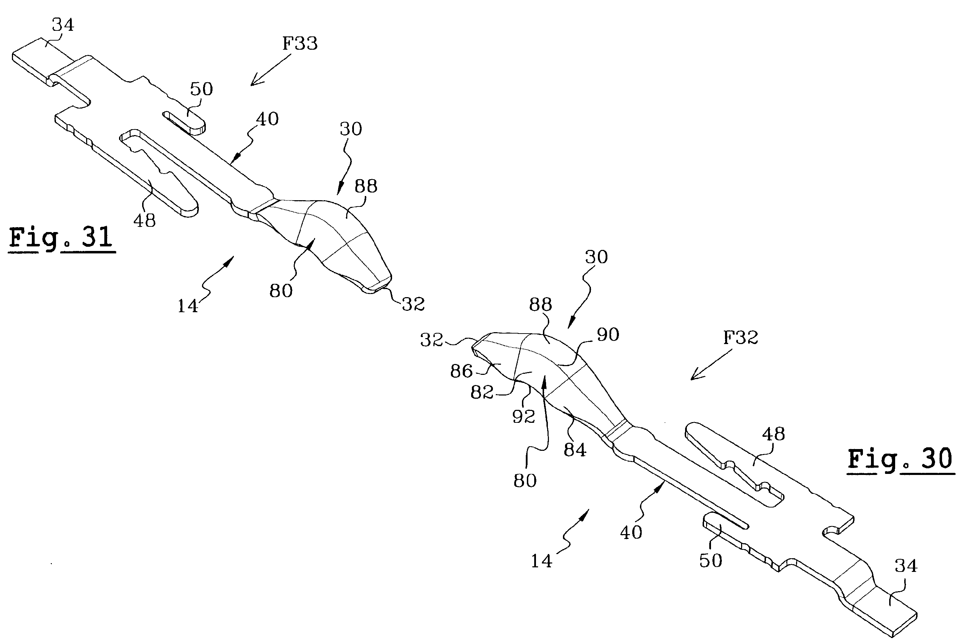

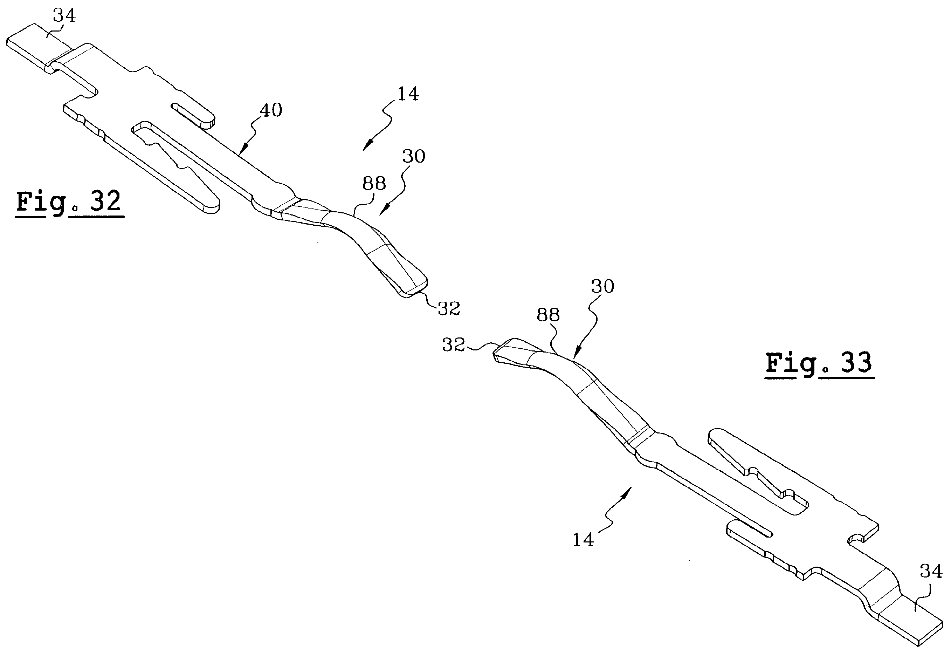

Figures 23 to 33 show a second embodiment of a connector fitted with a contact blade according to the invention.

Each connector 10 here also has an overall general design known in the prior art, but it is fitted with contact blades having unsymmetrical or asymmetrical spoons with inclined faces 80 similar to those that have just been described with reference to Figures 10 to 22.

The connector 10 and its insulating body 12 illustrated in Figures 23 to 33 is of the thin type and it makes use of contact blades of an elongate overall design, that is to say without a hairpin-shaped 180° bend, this type of simple elongate blade also being called a "cross" blade.

The contact spoons 30 of each of the blades 14 with which the thin connector shown in Figures 23 to 29 is fitted are of identical design to that of the spoons 30 shown in Figures 10 to 22.

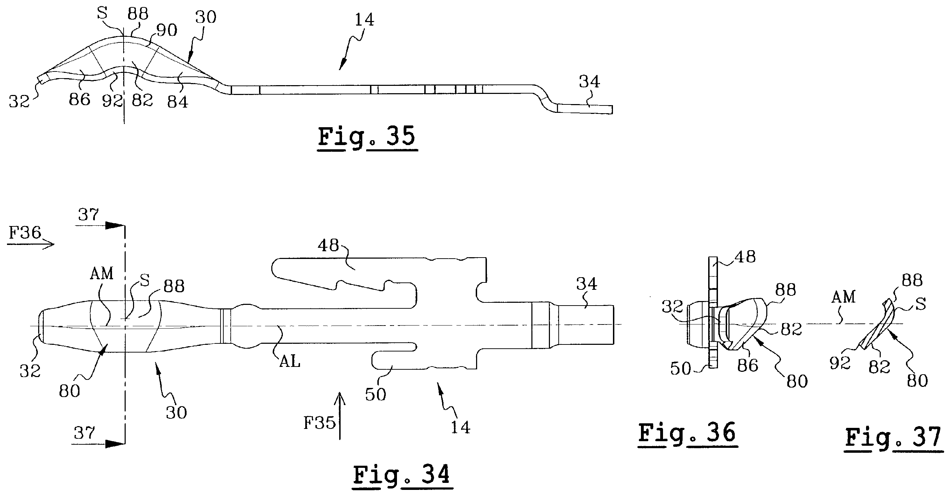

This may especially be seen with reference to the detailed views of the contact blades shown in Figures 34 to 37 in which it may be seen that each blade has a spoon of unsymmetrical overall design.

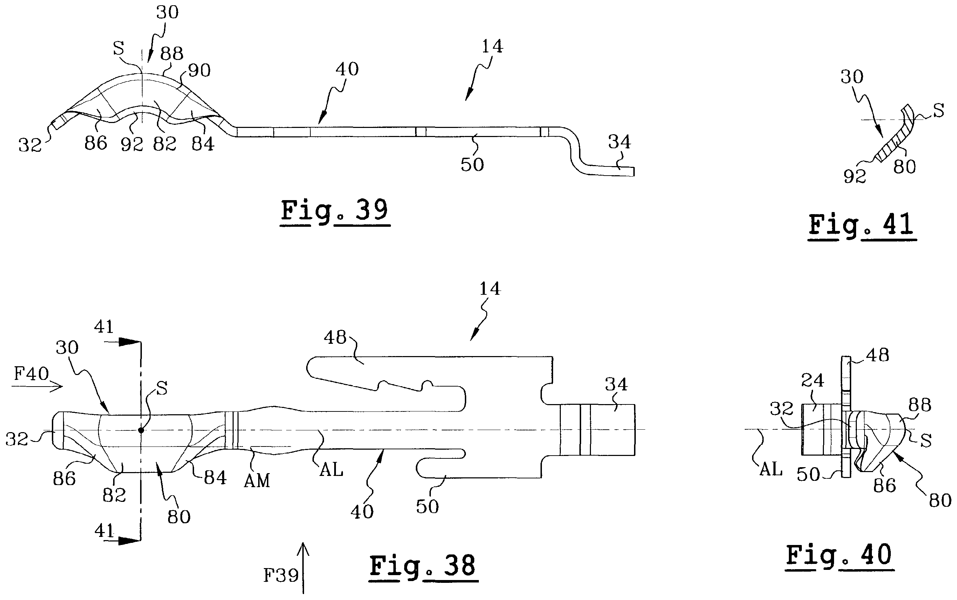

Another illustrative example of a contact blade according to the teachings of the invention is illustrated in Figures 38 to 41.

According to this design, the contact spoon 30 is overall offset transversely with respect to the longitudinal mid axis AL of the contact blade 14.

This type of transversely offset spoon-type blade is illustrated with reference to a "cross"-type blade similar to that shown in Figures 34 to 37, but it may, of course, also be applied to a blade of the "cantilever" type as illustrated in Figures 10 to 21.

The offset, which is transversely downwards with regard to Figure 38, of the spoon 30 with respect to the longitudinal axis AL makes it possible to "reposition" the top S of the contact spoon 30 on the longitudinal axis AL.

Of course, such a design of a transversely offset spoon means that the design of the insulating body has to be modified with respect to a connector according to the prior art, so as especially to modify the shape and the dimensions of the cavities in order to allow the contact blades to be inserted in the longitudinal direction into their corresponding cavities.

Comparing, for example, Figures 34 and 38, it may be clearly seen that the longitudinal mid axis AM of the spoon 30 is approximately coincident with the longitudinal mid-axis AL of the blade 14 in the case of the embodiment illustrated in Figures 34 to 37, whereas, in the embodiment illustrated in Figures 38 to 41, this longitudinal mid-axis AM of the spoon 30 is offset transversely with respect to the longitudinal mid-axis AL of the blade 14.

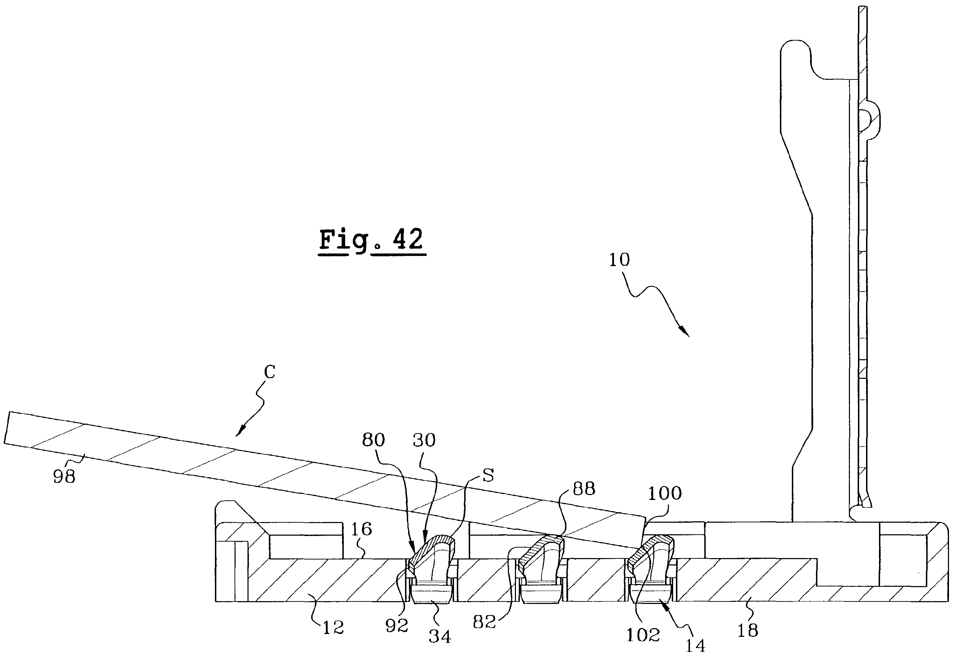

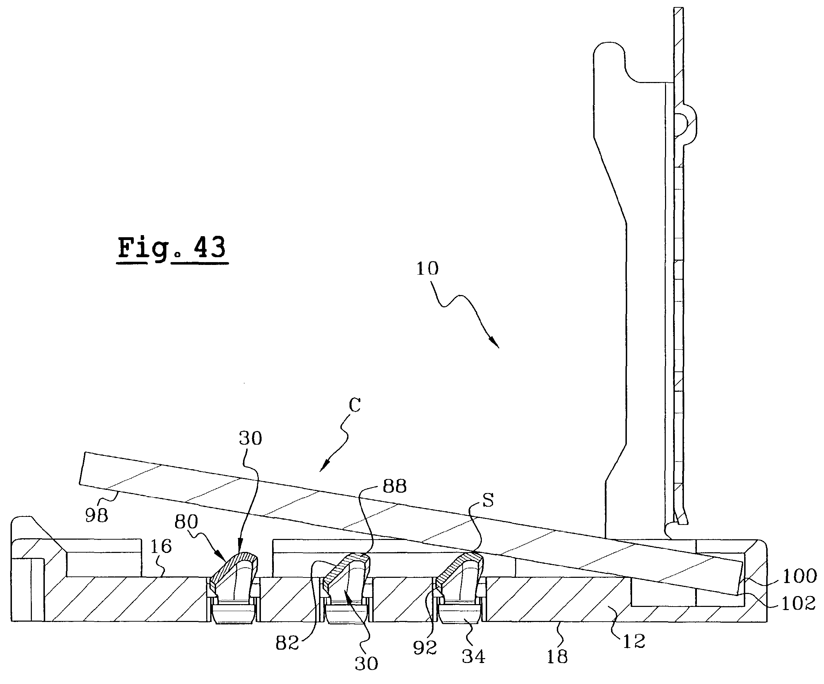

Figures 42 and 43 illustrate the advantage provided by contact blades according to the teachings of the invention when they are used in a connector 10 into which a card C is inserted, or put into place, into the connector, on the one hand, in an overall transverse direction of insertion and, on the other hand, at a relatively large inclination from the overall plane of the card C with respect to the horizontal plane of the upper face 16 of the insulating body 12 of the connector 10.

As may be seen especially in Figure 42, the presence of the inclined lateral faces 80 with which the edge 100, 102 of the card C engages makes it possible to benefit from the ramp effect in order to make the contact blades move away, while making it easier to insert the card C.

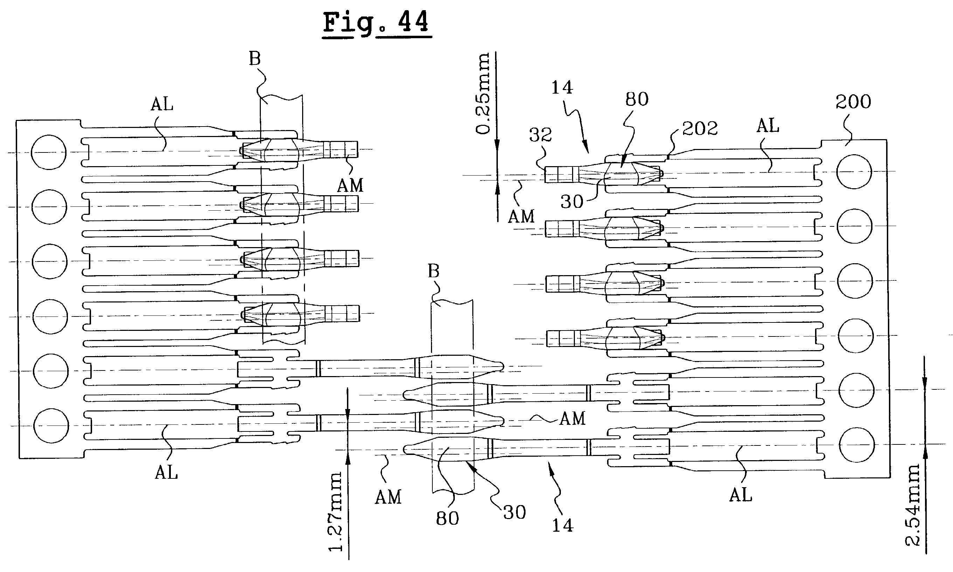

The design according to the invention of the unsymmetrical spoon with an inclined lateral face allows "lateral" insertion of the card, while maintaining the industrial advantage of imbricated cutting of the spoons belonging to the facing pairs of contacts. This process of imbricated cutting, which is shown in Figure 44, allows an overall saving of metal to be made, but above all a saving of the precious metal which covers the upper face of the contact spoons.

This precious metal, for example gold, is "deposited" prior to the steps of cutting and forming the contact spoons, either by the electroplating method (deposition of a continuous strip of precious metal) or by the method called the "inlay" method (incrustation by corolling of a continuous strip of precious metal into the metal of the substrate).

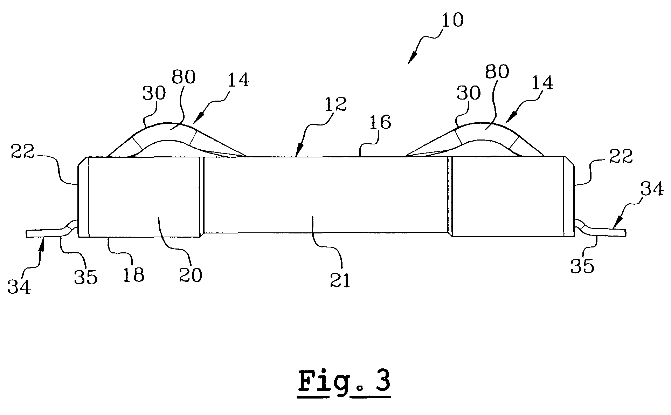

Figure 3 of Patent US-A-5 527 192 describes a symmetrical spoon which, although it does not project beyond the upper face of the insulator by more than two thirds of its height as shown in Figure 2, does allow a smart card to be inserted laterally. However, this contact is expensive to manufacture and it has never been able to be produced on an industrial scale using the "inlay" technique, since the transverse evolute of this spoon is substantially greater than the 1.27 mm pitch and it therefore does not allow imbricated cutting. In this regard, it will be noted that the contact blades are the most expensive component of the connector and that it is therefore paramount, in order to have a low-cost connector, to be able to mass-produce it on an industrial scale by saving on precious metal.

On the other hand, according to the invention, the following requirements must be met:

a) to ensure reliable electrical connection, taking into account the variations in the heightwise position of the smart card with respect to the upper face of the insulation (which are due, on the one hand, to the ± 0.08 mm variations in the thickness of the standardized cards and, on the other hand, to the tolerances on the production and assembling of the read cases), the height of the contact beyond the upper face of the insulator is at least 0.5 mm;

b) to guarantee the correct lateral contacting of the card edge with the inclined face of the spoon, the lower edge 92 of the latter will lie about 0.1 mm in the plane of the upper face 16 of the insulator;

c) to avoid too high a value of the horizontal component in the transverse direction of the force exerted by the card on the spoon during contacting, the inclined face 80 of the unsymmetrical spoon making an angle of about 45° with the horizontal plane of the face 16 of the insulator;

d) to avoid, when withdrawing the card, rubbing on the latter (and in particular the contacting of the sharp edges of these contact pads with that "lateral" edge of the spoon which is on the opposite side from the inclined face 80), it is necessary to provide a domed part of about 0.2 mm beyond the top of the spoon.

This results, nevertheless, in a design of the spoon such that the transverse evolute of the unsymmetrical spoon is equal to :

$$(0.5 + 0.1) \cdot \sqrt{2} + 0.2 = 1.05 \text{ mm.}$$

This value therefore allows imbricated cutting to the 1.27 mm pitch.
Conversely, even with a "protruding" height of 0.35 mm, a symmetrical spoon provided with two inclined faces 80 would have an evolute of:

$$(0.35 + 0.1) \cdot \sqrt{2} \text{ x } 2 = 1.273 \text{ mm,}$$

which would not allow imbricated cutting to the 1.27 mm pitch.
The cutting process is illustrated schematically in Figure 44 in the lower part of which the contact blades and the spoons 30 are shown after imbricated cutting and in the upper part of which the contact blades 14 and the spoons are shown in their final shape.
This figure shows, in outline, the strip B of precious metal which covers the upper face of the contact spoons 30, thus showing the "very small waste of precious metal between two opposed and adjacent spoons.
Once the contact blades of the same row have been cut and shaped, they are joined together in the 2.54 mm pitch, by a transverse strip 200 which allows them to be simultaneously inserted longitudinally into the insulating body of a connector, the transverse strip then being separated at the linkage points 202.

## Claims

1. Electrical connector (10) for connecting a smart card (C) having, on one (98) of its main faces, a plurality of aligned electrical contact pads, the connector comprising:

   - a contact-holding body of insulating material (12) having a plane horizontal upper face (16) extending in two perpendicular directions, the longitudinal direction (L) and the transverse direction (T), and
   - a plurality of electrical conductors (14) in the form of elastically deformable blades arranged so as to be parallel to the said longitudinal direction (L),

   each contact blade (14) comprising:

   - a curved first end (30) for contact with a corresponding pad on the card C, which extends through a housing in the insulating body so as to project out of the plane of the upper plane face (16) of the insulating body (12);
   - a central portion (38, 40) for connecting the blade (14) to the insulating body (12); and
   - a second end (34) for connecting the blade (14) to a processing circuit of the read-write device;

   and of the type in which the curved contact end (30) has the overall shape of an upside down spoon, the external convex face of which is oriented upwards in order to define a contacting region (88) or top (S) of the blade (14, 30) and which is curved about two, longitudinal and transverse, axes in order to define at least one lateral face (80) of the contact spoon (30), of overall longitudinal orientation, which extends downwards towards the upper face of the insulating body (12),
   **characterized in that** the said lateral face (80) of the contact spoon (30) is an approximately plane face which is inclined with respect to the horizontal plane of the upper face (16) of the insulating body (12) in order to form a ramp with which an edge (100, 102) of the card C is capable of engaging when it is being put into place in the read-write device (94).

2. Connector according to the preceding claim, **characterized in that** the contact spoon (30) has a design which is unsymmetrical with respect to its vertical longitudinal mid-plane (AM).

3. Connector according to the preceding claim, **characterized in that** the said inclined lateral face (80) of the contact spoon (30) makes an angle of about 45° with respect to the plane of the horizontal upper face (16) of the insulating body (12).

4. Connector according to any one of the preceding claims, **characterized in that**, when the contact blade (14) is in its rest state, at least one portion of the lower longitudinal edge (92) of the said inclined lateral face (80) of the contact spoon (30) lies vertically below the plane of the upper face (16) of the insulating body (12).

5. Connector according to the preceding claim, **characterized in that**, when the contact blade (14) is in its rest state, the lower longitudinal edge (92) of the said inclined lateral face (80) of the contact spoon is entirely located vertically below the plane of the upper face (16) of the insulating body (12).

6. Connector according to any one of the preceding claims, **characterized in that** the said inclined lateral face (80) of the contact spoon has an approximately plane central portion (82), which is parallel to the said longitudinal direction (L), and two, front (84) and rear (86), end portions which are inclined with respect to the longitudinal axis of the contact spoon.

7. Connector according to the preceding claim, **characterized in that** the central portion (82) of the said inclined lateral face (80) of the contact spoon (30) is centred longitudinally with respect to the contacting top (S) of the contact blade (30).

8. Electrical connector according to any one of the preceding claims, **characterized in that** the said inclined transverse face (80) of the contact spoon (30) extends from a central and domed top region (88) of the contact spoon (30).

9. Electrical connector according to any one of the preceding claims, **characterized in that** the longitudinal mid-axis (AL) of the contact blade (14) lies approximately in the vertical longitudinal mid-plane (AM) of the contact spoon (30) and **in that** the contacting top (S) is offset transversely with respect to the vertical longitudinal mid-plane (AM) of the contact spoon (30).

10. Electrical connector according to any one of Claims 1 to 7, **characterized in that** the longitudinal mid-axis (AL) of the contact blade (14) is offset transversely with respect to the vertical longitudinal mid-plane (AM) of the contact spoon (30) and **in that** the contacting top (S) lies in the vertical longitudinal mid-plane (AM) of the contact spoon (30).

11. Connector according to any one of the preceding claims, **characterized in that** the said contact end (30) is extended longitudinally forwards by a nose (32) which is pressed elastically, vertically upwards, by bearing against a stop surface (66, 70) of the insulating body (12) in order to determine the rest state of the contact blade (14) with respect to the insulating body (12).

12. Connector according to any one of the preceding claims, **characterized in that** the insulating body (12) is bounded longitudinally by at least one rear vertical plane transverse face (22) in which housings (24) emerge longitudinally, each of which housings accommodates a contact blade (14), into which the contact blade is put into place by longitudinal insertion from the rear forwards, and each of which housings is open (60) in the plane upper face (16) of the insulating body (12) for passage of the said curved contact end (30).

13. Connector according to any one of the preceding claims, **characterized in that** the central connecting part (38) of each blade (14) is a part bent into the form of a hairpin extending approximately parallel to the upper plane face (16) of the insulating body (12), having a first branch (40), the free end of which is extended by the connection end (34) of the blade (14) and which includes means (47) for fastening the blade (14) to the insulating body (12), and having a second branch (42), the free end of which is extended by the curved contact end (30) of the blade (14), the first (40) and second (42) branches being joined together by a central U-shaped bend (38) turned towards the centre of the connector.

Fig. 1

**Fig. 2**

EP 1 162 699 A1

EP 1 162 699 A1

**Fig. 3**

EP 1 162 699 A1

Fig. 4

Fig. 5

EP 1 162 699 A1

**Fig. 6**

EP 1 162 699 A1

**Fig. 7**

Fig. 9

Fig. 8

Fig. 10

EP 1 162 699 A1

Fig. 11

**Fig. 12**

Fig. 13

EP 1 162 699 A1

Fig. 15B

Fig. 16

Fig. 15A

Fig. 14

Fig. 18

Fig. 17

Fig. 20

Fig. 19

Fig. 22

Fig. 21

26

Fig. 23

Fig. 24

Fig. 25

Fig. 26

EP 1 162 699 A1

**Fig. 28**

**Fig. 27**

**Fig. 29**

EP 1 162 699 A1

Fig. 30

Fig. 31

Fig. 33

Fig. 32

Fig. 37

Fig. 36

Fig. 35

Fig. 34

Fig. 41

Fig. 40

Fig. 39

Fig. 38

Fig. 42

EP 1 162 699 A1

**Fig. 43**

Fig. 44

EP 1 162 699 A1

## EUROPEAN SEARCH REPORT

European Patent
Office

**Application Number**

EP 01 40 1357

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 969 408 A (AMPHENOL TUCHEL ELECT) 5 January 2000 (2000-01-05) * column 5, line 36 - line 47; figures 1,2 * * column 6, line 25 - line 29 * --- | 1 | H01R13/24 G06K7/00 |
| A | EP 0 656 597 A (FRAMATOME CONNECTORS INT) 7 June 1995 (1995-06-07) * column 4, line 19 - line 30; figures 1,4A-4C * --- | 1 | |
| A | EP 0 926 769 A (ITT MFG ENTERPRISES INC) 30 June 1999 (1999-06-30) * abstract; figures 1,8 * --- | 1 | |
| A | EP 0 617 488 A (WHITAKER CORP) 28 September 1994 (1994-09-28) * abstract; figures 1,3 * --- | 1 | |
| A | EP 0 570 039 A (GEN MOTORS CORP) 18 November 1993 (1993-11-18) * column 3, line 23 - line 39; figures 1,5 * ------ | 1 | **TECHNICAL FIELDS SEARCHED (Int.Cl.7)** H01R G06K |

The present search report has been drawn up for all claims

| Place of search | Date of completion of the search | Examiner |
|---|---|---|
| THE HAGUE | 17 September 2001 | Jiménez, J |

## ANNEX TO THE EUROPEAN SEARCH REPORT
## ON EUROPEAN PATENT APPLICATION NO.

EP 01 40 1357

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2001

| Patent document cited in search report | | Publication date | Patent family member(s) | | Publication date |
|---|---|---|---|---|---|
| EP 0969408 | A | 05-01-2000 | DE | 19829551 A1 | 20-01-2000 |
| | | | EP | 0969408 A2 | 05-01-2000 |
| | | | JP | 2000036349 A | 02-02-2000 |
| | | | US | 6231394 B1 | 15-05-2001 |
| EP 0656597 | A | 07-06-1995 | FR | 2713407 A1 | 09-06-1995 |
| | | | DE | 69401489 D1 | 27-02-1997 |
| | | | DE | 69401489 T2 | 15-05-1997 |
| | | | EP | 0656597 A1 | 07-06-1995 |
| | | | EP | 0656598 A1 | 07-06-1995 |
| | | | FR | 2713406 A1 | 09-06-1995 |
| EP 0926769 | A | 30-06-1999 | FR | 2773275 A1 | 02-07-1999 |
| | | | CN | 1221237 A | 30-06-1999 |
| | | | EP | 0926769 A1 | 30-06-1999 |
| | | | JP | 11250965 A | 17-09-1999 |
| | | | TW | 421899 B | 11-02-2001 |
| | | | US | 6053776 A | 25-04-2000 |
| | | | US | 6120328 A | 19-09-2000 |
| EP 0617488 | A | 28-09-1994 | DE | 69407844 D1 | 19-02-1998 |
| | | | DE | 69407844 T2 | 10-06-1998 |
| | | | EP | 0617488 A1 | 28-09-1994 |
| | | | JP | 6342680 A | 13-12-1994 |
| | | | US | 5470260 A | 28-11-1995 |
| EP 0570039 | A | 18-11-1993 | US | 5186665 A | 16-02-1993 |
| | | | DE | 69300241 D1 | 10-08-1995 |
| | | | DE | 69300241 T2 | 02-11-1995 |
| | | | EP | 0570039 A1 | 18-11-1993 |
| | | | JP | 2821335 B2 | 05-11-1998 |
| | | | JP | 6020738 A | 28-01-1994 |

EPO FORM P0459

For more details about this annex : see Official Journal of the European Patent Office, No. 12/82